# EUROPÄISCHE PATENTSCHRIFT

(11) **EP 0 809 562 B1**
(45) Veröffentlichungstag und Bekanntmachung des Hinweises auf die Patenterteilung: **12.08.1998**
(21) Anmeldenummer: 96902859.6
(22) Anmeldetag: 10.02.1996
(51) Int. Cl.: B28B 11/16, B28B 5/02

(54) **VORRICHTUNG ZUM ZUSCHNEIDEN VON DACHSTEINFORMSTÜCKEN**
DEVICE FOR CUTTING TO SIZE SHAPED PARTS FOR ROOFING TILES
DISPOSITIF POUR DECOUPER DES TUILES SOUS FORME DE PIECES MOULEES

(30) Priorität: 10.02.1995 DE 19504152
(43) Veröffentlichungstag der Anmeldung: 03.12.1997
(73) Patentinhaber: BRAAS GMBH, 61440 Oberursel (DE)
(72) Erfinder: RAPP, Helmut, D-63110 Rodgau (DE)
(74) Vertreter: Brüning, Rolf, Dr.rer.nat.
(86) Internationale Anmeldenummer: DE9600229
(87) Internationale Veröffentlichungsnummer: WO9624475

(56) Entgegenhaltungen:
- DE-C- 46 743
- DE-C- 193 508
- DE-C- 600 317
- FR-A- 2 608 090
- PRODUCT ENGINEERING , Bd. 35, Nr. 22, 26.Oktober 1964, Seite 108 XP002004409 W. JENSEN: "FROM FOREIGN SOURCES : MORE SELECTIONS OF MACHINERY MECHANISMS"

## Beschreibung

Die Erfindung betrifft eine Vorrichtung zum Zuschneiden von einzelnen Dachsteinformstücken aus einem Band aus Frischbeton, das auf einem Strang aneinanderstoßender Unterformen von gleicher Länge kontinuierlich gefördert wird, aufweisend eine Schneidstation mit zumindest einem Schneidwerkzeug an einem reversierend bewegbaren Schlitten, der zumindest kurzzeitig mit der Geschwindigkeit des Stranges parallel zu dessen Förderrichtung bewegbar ist.

Eine derartige Vorrichtung wird beispielsweise bei der Herstellung von Betondachsteinen nach dem Strangpreßverfahren benötigt. Bei diesem Verfahren wird auf einem mit konstanter Geschwindigkeit geförderten Strang von aneinanderstoßenden Unterformen gleicher Länge eine Frischbetonschicht als endloses Band aufgebracht, das auf der Oberseite durch Formwerkzeuge der für Betondachsteine üblichen Oberflächenkontur entsprechend geformt wird. Diese kontinuierlich aufgebrachte Frischbetonschicht wird anschließend in einer Schneidstation jeweils am Ende einer jeden Unterform mittels eines als Messer ausgebildeten Schneidwerkzeugs zerschnitten, so daß jede Unterform einen einzelnen Formkörper trägt, hier einen Betondachsteinrohling. Dazu ist es erforderlich, daß das Messer stets exakt an der Stoßstelle zwischen zwei Unterformen in die Frischbetonschicht eingeführt wird. Üblicherweise bewegt sich der Strang in horizontaler Richtung und das Messer in vertikaler Richtung. Um ein Abheben der Betondachsteinrohlinge von den Unterformen beim Herausziehen des Messers zu verhindern, muß sich das Messer während des Schnitts mit möglichst derselben Horizontalgeschwindigkeit bewegen wie die Unterformen selbst. Wird das Messer mit einer geringeren Horizontalgeschwindigkeit bewegt, so kann der nachfolgende Betondachsteinrohling auf das Messer aufgeschoben und beim Herausziehen desselben an diesem anhaften, so daß der Betondachsteinrohling von der Unterform abgehoben wird. Da Beton üblicherweise Körner von bis zu 4 mm Durchmesser enthält, muß das Messer sehr stabil sein und sehr schnell bewegt werden, um eine die Körner durchtrennende schlagende Wirkung zu erreichen.

Eine Vorrichtung der eingangs geschilderten Art ist aus der DE-A-22 52 047 bekannt. Bei dieser Vorrichtung ist das von einem Druckluftzylinder betätigte Messer an einem in horizontaler Richtung reversierbar bewegbaren Schlitten montiert, wobei der Schlitten über eine Kurbel und Pleuelstange angetrieben wird. Die Kurbel ist über Ketten mit dem Antrieb des mit kontinuierlicher Horizontalgeschwindigkeit geförderten Strangs der aneinanderstoßenden Unterformen verbunden, wobei die Kurbel eine volle Umdrehung ausführt, während das Band um die Länge einer Unterform gefördert wird. Aufgrund des Antriebes mit Kurbel und Pleuelstange führt der das Messer tragende Schlitten eine im Geschwindigkeitsdiagramm etwa sinusförmige Bewegung aus. Die dabei erreichte Spitzengeschwindigkeit entspricht der Umfangsgeschwindigkeit des Kurbelzapfens. Da die Spitzengeschwindigkeit nur im Maximum des sinusförmigen Geschwindigkeitsdiagramms erreicht wird, ist der Radius des Kurbelzapfens geringfügig vergrößert, so daß der Umfang der vom Kurbelzapfen beschriebenen Kreisbahn etwa 2% größer ist als die Länge einer Unterform. Dadurch wird erreicht, daß die Maximalgeschwindigkeit des Schlittens 2% höher ist als die Horizontalgeschwindigkeit des Strangs. Kurz vor und kurz nach Erreichen der Maximalgeschwindigkeit des Schlittens bewegt sich daher der Schlitten an zwei Punkten der reversierenden Bewegung exakt mit der gleichen Geschwindigkeit wie die Unterformen. Daher steht nur ein sehr kurzer Abschnitt des Gesamthubs des Schlittens zur Ausführung des Schnitts zur Verfügung. Insbesondere bei hohen Durchsatzzahlen von mehr als 150 Unterformen pro Minute ist die für den Schnitt zur Verfügung stehende Zeit während des kurzen Weges der annähernd synchronen Bewegung von Schlitten und Unterform äußerst gering.

Für die Herstellung normaler Betondachsteine, bei denen die Schnitt-Tiefe etwa 20 mm beträgt, genügt diese Ausführung der Vorrichtung. Sollen jedoch beispielsweise Giebelsteine geschnitten werden, deren Ortganglappen mehr als 10 cm hoch ist, so muß der vom Messer beim Schneiden zurückgelegte Weg der Schnitt-Tiefe entsprechend fünf bis acht mal so lang sein. Dies erfordert naturgemäß einen längeren Zeitraum, denn die Geschwindigkeit der Messerbewegung kann infolge wachsender Massenkräfte nicht beliebig gesteigert werden.

Aufgabe der vorliegenden Erfindung ist es, eine Vorrichtung zu schaffen, bei der für den Schnitt ein längerer Zeitraum als bei der bekannten Vorrichtung zur Verfügung steht, so daß auch tiefe Schnitte, beispielsweise für Ortgang- oder Giebelsteine ausgeführt werden können.

Erfindungsgemäß wird die Aufgabe dadurch gelöst, daß zum Antrieb des Schlittens ein Kurvengetriebe vorgesehen ist, das den Schlitten über eine endliche Wegstrecke mit der Geschwindigkeit des Stranges parallel zu dessen Förderrichtung bewegt, daß der Schlitten unmittelbar durch das Kurvengetriebe zwangsgeführt ist, wobei das Kurvengetriebe eine im wesentlichen herzförmig geformte Kurvenscheibe mit Abschnitten in Form einer Archimedischen Spirale und an der Oberfläche der Kurvenscheibe anliegende mit dem Schlitten verbundene Führungselemente aufweist.

Gegenüber dem bekannten Kurbelantrieb mit einem etwa sinusförmigen Geschwindigkeits-Weg-Diagramm hat das Kurvengetriebe den Vorteil, daß der zeitliche Geschwindigkeitsverlauf des Schlittens entsprechend der Kurvenform des Getriebes in gewissen Grenzen beeinflußt werden kann, so daß der Schlitten über eine endliche Wegstrecke mit der Geschwindigkeit des Stranges parallel zu dessen Förderrichtung bewegt wird.

Eine exakte Führung des Schlittens durch das Kurvengetriebe wird auch bei hohen Taktgeschwindigkeiten der Vorrichtung dadurch erreicht, daß der Schlitten durch das Kurvengetriebe zwangsgeführt ist. Dadurch wird das Auftreten von Resonanzerscheinungen bei bestimmten Taktgeschwindigkeiten vermieden, die bei durch Federkraft an eine einseitige Führung angedrücktem Schlitten auftreten können.

Eine für den rauhen Alltagsbetrieb der Betondachsteinherstellung besonders geeignete Ausführung wird durch die im wesentlichen herzförmig geformte Kurvenscheibe und an deren Umfangsfläche anliegende mit dem Schlitten verbundene Führungselemente erreicht, wobei die Drehachse der Kurvenscheibe rechtwinklig zur Bewegungslinie des Schlittens angeordnet ist. Als Führungselemente eignen sich beispielsweise zwei beiderseits der Kurvenscheibe angeordnete kugel- oder wälzgelagerte Führungsrollen. Die Wellen der Führungsrollen können fest mit dem Schlitten verbunden sein. Die Kurvenscheibe weist in jeder die Drehachse schneidenden Linie den gleichen Durchmesser auf, so daß beide Führungsrollen stets auf der Mantelfläche anliegen.

Vorteilhafterweise ist die Kurvenscheibe symmetrisch ausgeführt, wobei die Abschnitte in Form einer archimedischen Spirale, auf denen die Führungselemente mit konstanter Geschwindigkeit bewegt werden, komplementär zueinander angeordnet sind. Mit anderen Worten liegt die eine Führungsrolle an einem Abschnitt mit zunehmender Steigung und die andere Führungsrolle an einem Abschnitt mit abnehmender Steigung an oder umgekehrt. Im Bereich der Totpunkte weicht die Form der Kurvenscheibe von der archimedischen Spirale ab, so daß eine beschleunigte Bewegung einschließlich Umkehr der Bewegungsrichtung in den Totpunkten erfolgt. Es versteht sich, daß die Abschnitte in Form einer archimedischen Spirale geringfügig von der theoretischen Kurvenform abweichen, weil die Berührungslinie eines Führungselements bei Verwendung einer Führungsrolle abhängig von der Steigung der Kurve und vom Durchmesser der Führungsrolle geringfügig von der theoretischen Berührungslinie abweicht. Die Kurvenscheibe ist so geformt, daß die Wirkung einer archimedischen Spirale tatsächlich erreicht wird, also eine dem Drehwinkel der Kurvenscheibe proportionale Bewegung der Führungsrolle.

Zur Angleichung der Geschwindigkeit des Schlittens an die Geschwindigkeit des Strangs können für unterschiedlich lange Unterformen Kurvenscheiben mit unterschiedlichen Konturen eingesetzt werden. Ebenso kann die Strecke, auf der sich der Schlitten mit derselben Geschwindigkeit wie der Strang bewegt, durch die Kontur der Kurvenscheibe beeinflußt werden, so daß bei einer kurzen Strecke mit synchroner Geschwindigkeit eine längere Wegstrecke im Bereich der Totpunkte zur Verfügung steht. Dadurch können insbesondere bei hohen Taktgeschwindigkeiten des Strangs die Massenkräfte im Bereich der Totpunkte reduziert werden.

Vorteilhafterweise ist der Hub des reversierenden Schlittens kleiner als die halbe Länge der Unterformen. Dadurch werden extreme Beschleunigungsspitzen im Bereich der Totpunkte der reversierenden Schlittenbewegung vermieden.

Um die Bewegung des Schlittens mit der Bewegung des Bandes zu synchronisieren, ist es vorteilhaft, wenn das Kurvengetriebe mit dem Antrieb des Bandes koppelbar ist. Die Koppelung erfolgt am einfachsten mechanisch über Ketten, Zahnriemen oder dergleichen. Selbstverständlich kann die Synchronisation auch auf elektrischem Wege, beispielsweise durch Verwendung von steuerbaren Synchronmotoren erreicht werden.

Eine Anpassung der Schlittenbewegung an Unterformen unterschiedlicher Länge ist möglich, wenn die Drehzahl des Kurvengetriebes relativ zur Drehzahl des Antriebs des Strangs der Unterformen verstellbar ist. Die Verstellung kann durch ein beliebiges Stellgetriebe erfolgen. Vorteilhaft ist es, ein Schaltgetriebe mit auf die Länge verschiedener Unterformen abgestimmten Übersetzungen zu verwenden. Bei der Herstellung von Betondachsteinen werden üblicherweise nur Unterformen mit Längen im Bereich von 400 bis 450 mm verwendet. Durch das Stellgetriebe wird bewirkt, daß eine komplette Hin- und Herbewegung des Schlittens in derselben Zeit erfolgt, in der der Strang um die Länge einer Unterform fortbewegt wird, so daß das Schneidwerkzeug jeweils zwischen zwei Unterformen eindringen kann. Bei konstanter Fördergeschwindigkeit des Strangs heißt das, daß bei kurzen Unterformen die Hin- und Herbewegung des Schlittens schneller erfolgt als bei langen Unterformen.

Eine exakte Justierung des Zeitpunktes des Schnitts wird möglich, wenn das Kurvengetriebe relativ zum Strang der Unterformen in Förderrichtung längsverschiebbar ist. Dadurch wird der gesamte Schlitten ebenfalls in Längsrichtung verschoben, so daß eine Feinjustierung der Lage des Schnitts relativ zum Strang der Unterformen möglich ist. Dadurch kann der Schnitt exakt auf die Stoßstelle zwischen zwei Unterformen justiert werden. Die Längsverschiebung des Kurvengetriebes kann durch eine automatische Steuerung erfolgen, um auf diese Weise geringfügige Längenunterschiede von Unterformen auszugleichen.

Das Schneidwerkzeug kann beispielsweise ein pneumatisch betätigtes Schneidmesser sein. Zum Auslösen des Schneidvorgangs ist es vorteilhaft, wenn ein mit dem Kurvengetriebe verbundener Signalgeber vorgesehen ist, der einen Impuls zur Betätigung des Schneidwerkzeugs abgibt, während sich der Schlitten mit derselben Geschwindigkeit wie der Strang bewegt.

Ein Verkleben der geschnittenen Formkörper an ihren Stirnseiten wird verhindert, wenn am Schlitten ein zweites Schneidwerkzeug vorgesehen ist, das einen Abschnitt an der Stirnseite eines Formstücks entfernt. Dadurch wird erreicht, daß die Formstücke etwas kürzer sind als die Unterformen, so daß ein Verkleben der Formstücke nicht mehr erfolgen kann, wenn diese auf den unmittelbar aneinander anliegenden Unterformen ausgehärtet werden.

Um beispielsweise eine Stirnseite eines Formstücks mit einer besonderen Kontur zu versehen, kann am Schlitten ein Zurichtwerkzeug angebracht sein. Dies ist wünschenswert, um beispielsweise die fußseitige Oberkante eines Betondachsteins abzurunden.

Zur Vermeidung des Einwirkens hoher Kräfte auf das Kurvengetriebe im Bereich der Totpunkte wird empfohlen, zur Aufnahme bzw. zur Rückführung der Bewegungsenergie der Hubbewegung des Schlittens im Bereich der Totpunkte Stoßdämpfer und/oder Kraftspeicher wie Federspeicher vorzusehen. Auf diese Weise kann die beim Abbremsen des Schlittens aufgenommene Bewegungsenergie wiederum zum Beschleunigen in Gegenrichtung genutzt werden. Dadurch werden höhere Taktgeschwindigkeiten der Vorrichtung ermöglicht.

In der Zeichnung ist ein bevorzugtes Ausführungsbeispiel der Erfindung dargestellt, das im folgenden näher erläutert wird.

Es zeigt
- Fig. 1: eine erfindungsgemäße Vorrichtung in der Draufsicht
- Fig. 2: die Vorrichtung aus Fig. 1 in der Seitenansicht und
- Fig. 3: ein Bewegungsdiagramm

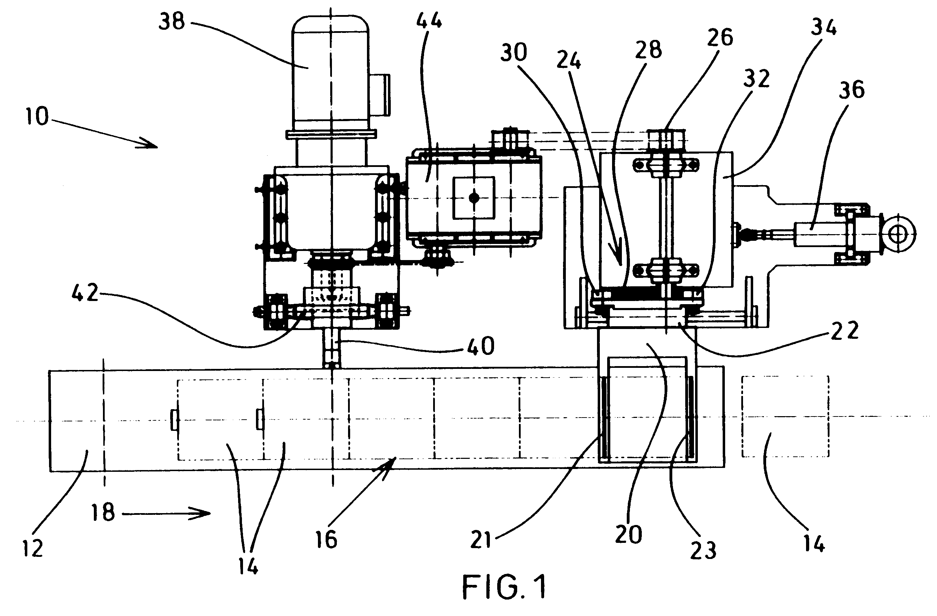

In Fig. 1 ist die Vorrichtung 10 zum Zerschneiden eines kontinuierlichen Bandes aus plastisch verformbarem Material in einzelne Formstücke in der Draufsicht dargestellt. Auf einer Fördereinrichtung 12 wird ein aus aneinanderstoßenden Unterformen 14 gebildeter Strang 16 mit konstanter Geschwindigkeit in Förderrichtung 18 einer Schneidstation 20 zugeführt, die ein Schneidwerkzeug 21 aufweist. Die Schneidstation 20 ist an einem reversierend bewegbaren Schlitten 22 angebracht, der parallel zur Förderrichtung 18 bewegbar ist. An der Schneidstation 20 ist außerdem ein Zurichtwerkzeug 23 angeordnet. Die reversierende Bewegung des Schlittens 22 erfolgt über ein Kurvengetriebe 24, das eine exzentrisch um ihre Achse 26 rotierbare Kurvenscheibe 28 aufweist. Beiderseits der Kurvenscheibe 28 sind mit dem Schlitten 22 verbundene Führungselemente 30 bzw. 32 angeordnet, die als kugelgelagerte Führungsrollen ausgebildet sind. Die Achse 26 der Kurvenscheibe 28 ist auf einem in Förderrichtung 18 längsverschiebbaren Rahmen 34 gelagert, der über eine Verstelleinrichtung 36 verschiebbar ist.

Der Antrieb des Strangs 16 und der Kurvenscheibe 28 erfolgt gemeinsam über einen Motor 38. Die zum Antrieb der den Strang 16 fördernden Fördereinrichtung 12 führende Welle 40 ist über eine Kupplung 42 mit dem Motor 38 verbindbar, während der Antrieb der Kurvenscheibe 28 über ein Schaltgetriebe 44 erfolgt. Das Schaltgetriebe 44 hat mehrere fest eingestellte Übersetzungen, die jeweils auf die Länge verschieden langer Unterformen 14 abgestimmt sind. Dadurch wird erreicht, daß jeweils genau eine Umdrehung der Kurvenscheibe 28 erfolgt, während der Strang 16 um die Länge einer Unterform 14 gefördert wird.

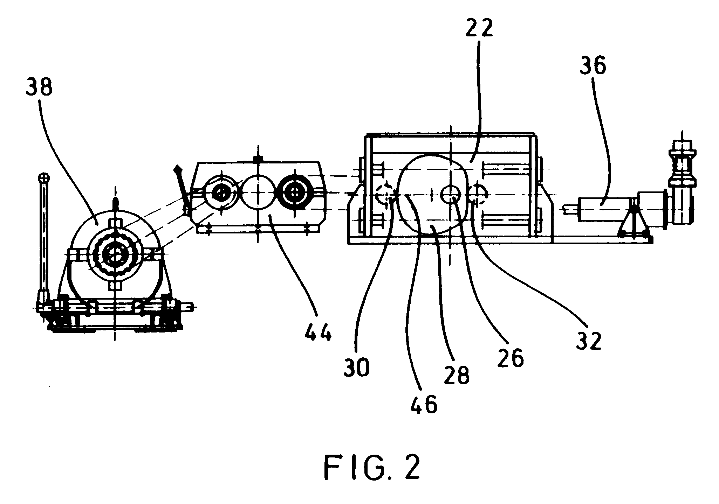

Aus Fig. 2 ist die Form der Kurvenscheibe 28 und die Anordnung der Führungselemente 30 bzw. 32 am Schlitten 22 erkennbar. Die Außenkontur der Kurvenscheibe 28 ist etwa herzförmig und symmetrisch zu der in Fig. 2 waagrecht verlaufenden Mittelachse 46. Der Durchmesser der Kurvenscheibe 28 ist konstant, so daß beide Führungselemente 30 bzw. 32 stets die Oberfläche der Kurvenscheibe 28 berühren und somit eine Zwangsführung des Schlittens 22 bewirken.

In Fig. 1 und Fig. 2 ist der Schlitten 22 an seinem linken Totpunkt dargestellt. Bei einer Rotation der Kurvenscheibe 28 - es ist gleichgültig, ob im oder gegen den Uhrzeigersinn - wird das zweite Führungselement 32 auf der hier rechts dargestellten steilen Flanke der Kurvenscheibe 28 in beschleunigter Bewegung nach rechts gedrückt. Nach einer Umdrehung von etwa 45° wird der Bereich einer archimedischen Spirale auf der Kurvenscheibe 28 erreicht und das zweite Führungselement 32 wird bis zum Erreichen eines Winkels von etwa 135° mit konstanter Geschwindigkeit nach rechts gedrückt. Anschließend verläuft die Kontur der Kurvenscheibe 28 bis zum Erreichen des Totpunktes flacher, so daß der Schlitten 22 abgebremst wird, wobei die Kraft hauptsächlich über das erste Führungselement 30 übertragen wird.

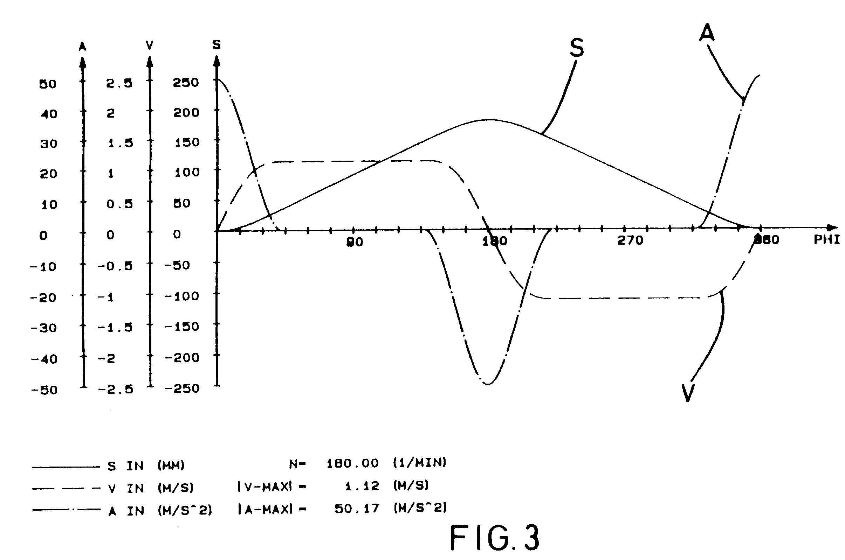

In Fig. 3 ist im Diagramm die Bewegung des Schlittens 22 bei einer Drehzahl der Kurvenscheibe von 180 Umdrehungen pro Minute dargestellt. Auf der Abszisse ist der Drehwinkel Phi der Kurvenscheibe in Winkelgraden angegeben. Auf der Ordinate sind für die ausgezogene Kurve S der Weg des Schlittens in mm, auf der gestrichelten Kurve V die Geschwindigkeit in m/s und auf der strichpunktierten Kurve A die Beschleunigung in m/s² angegeben.

Der strichpunktierten Kurve A kann entnommen werden, daß im Bereich der Totpunkte Beschleunigungen von ±50 m/s² auftreten, also etwa dem fünffachen Wert der Erdbeschleunigung. Bei einer Masse des Schlittens mit Schneidvorrichtung von etwa 100 kg treten demzufolge Kräfte von rund 500 kp auf. Infolge der massiven Ausführung der erfindungsgemäßen Vorrichtung und der Anordnung der Achse 26 der Kurvenscheibe 28 rechtwinklig zur Bewegungsrichtung des Schlittens 22 werden diese Kräfte von den als Wälzlagern ausgebildeten Lagern der Führungselemente 30, 32 und der Achse 26 verschleißfrei aufgenommen.

Besonders deutlich dokumentiert die gestrichelte Kurve V, daß im Bereich des Drehwinkels Phi von etwa 45° bis 135° eine konstante Geschwindigkeit des Schlittens in Förderrichtung erreicht wird. Die mit konstanter Geschwindigkeit zurückgelegte Wegstrecke beträgt über 100 mm bei einem Gesamthub von 180 mm. Entsprechend der Dimensionierung der Bauteile zur Übertragung der Rotation vom Motor 38 zur Kurvenscheibe 28 entspricht die konstante Geschwindigkeit des Schlittens 22 exakt der Geschwindigkeit des Strangs 16 in Förderrichtung 18.

## Patentansprüche

1. Vorrichtung (10) zum Zuschneiden von einzelnen Dachsteinformstücken aus einem Band aus Frischbeton, das auf einem Strang (16) aneinanderstoßender Unterformen (14) von gleicher Länge kontinuierlich gefördert wird, aufweisend eine Schneidstation (20) mit zumindest einem Schneidwerkzeug an einem reversierend bewegbaren Schlitten (22), der zumindest kurzzeitig mit der Geschwindigkeit des Stranges (16) parallel zu dessen Förderrichtung (18) bewegbar ist,
**dadurch gekennzeichnet**,
daß zum Antrieb des Schlittens (22) ein Kurvengetriebe (24) vorgesehen ist, das den Schlitten (22) über eine endliche Wegstrecke mit der Geschwindigkeit des Stranges (16) parallel zu dessen Förderrichtung (18) bewegt, daß der Schlitten (22) unmittelbar durch das Kurvengetriebe (24) zwangsgeführt ist, wobei das Kurvengetriebe (24) eine im wesentlichen herzförmig geformte Kurvenscheibe (28) mit Abschnitten in Form einer archimedischen Spirale und an der Oberfläche der Kurvenscheibe (28) anliegende mit dem Schlitten (22) verbundene Führungselemente (30, 32) aufweist.

2. Vorrichtung nach Anspruch 1,
**dadurch gekennzeichnet**,
daß der Hub des reversierenden Schlittens (22) kleiner ist als die halbe Länge der Unterformen (14).

3. Vorrichtung nach Anspruch 1 oder 2,
**dadurch gekennzeichnet**,
daß das Kurvengetriebe (24) mit dem Antrieb des Strangs (16) koppelbar ist.

4. Vorrichtung nach einem der Ansprüche 1 bis 3,
**dadurch gekennzeichnet**,
daß die Drehzahl des Kurvengetriebes (24) relativ zur Drehzahl des Antriebs des Strangs (16) der Unterformen (14) verstellbar ist.

5. Vorrichtung nach einem der Ansprüche 1 bis 4,
**dadurch gekennzeichnet**,
daß das Kurvengetriebe (24) relativ zum Strang (16) in Förderrichtung (18) längsverschiebbar ist.

6. Vorrichtung nach einem der Ansprüche 1 bis 5,
**dadurch gekennzeichnet**,
daß ein mit dem Kurvengetriebe (24) verbundener Signalgeber vorgesehen ist, der einen Impuls zur Betätigung des Schneidwerkzeugs abgibt, während sich der Schlitten (22) mit derselben Geschwindigkeit wie der Strang (16) bewegt.

7. Vorrichtung nach einem der Ansprüche 1 bis 6,
**dadurch gekennzeichnet**,
daß am Schlitten (22) ein zweites Schneidwerkzeug vorgesehen ist, das einen Abschnitt an der Stirnseite eines Formstücks entfernt.

8. Vorrichtung nach einem der Ansprüche 1 bis 7,
**dadurch gekennzeichnet**,
daß am Schlitten (22) ein Zurichtwerkzeug (23) angebracht ist, welches die Stirnseite des Formstücks formt.

9. Vorrichtung nach einem der Ansprüche 1 bis 8,
**dadurch gekennzeichnet**,
daß zur Aufnahme bzw. Rückführung der Bewegungsenergie der Hubbewegung des Schlittens (22) im Bereich der Totpunkte Stoßdämpfer und/oder Kraftspeicher vorgesehen sind.

## Claims

1. Device (10) for cutting to size individual shaped parts for roofing tiles from a strip of unset concrete which is continuously fed on a line (16) of contiguous bottom-half moulds (14) of equal length, said device comprising a cutting station (20) with at least one cutting tool on a sliding carriage (22) which can be moved in a reversible manner and is moved at least briefly at the speed of the line (16) parallel to the feed direction (18) thereof
**characterized therein that**
a cam mechanism (24) is provided for to actuate the sliding carriage (22), moving the sliding carriage (22) over a finite path at the speed of the line (16) parallel to the feed direction (18) thereof, in that the sliding carriage (22) is forcibly guided directly by the cam mechanism (24), the cam mechanism (24) showing a substantially heart-shaped cam plate (28) with sections in the shape of an Archimedean screw and guide components (30, 32) abutting the surface of the cam plate (28) connected to the sliding carriage (22).

2. Device according to claim 1,
**characterized therein that**
the stroke of the reversible sliding carriage (22) is smaller than the half length of the bottom-half moulds (14).

3. Device according to claim 1 or 2,
**characterized therein that**
the cam mechanism (24) can be coupled to the drive of the line (16).

4. Device according to one of claims 1 to 3,
**characterized therein that**
the speed of the cam mechanism (24) is regulable with respect to the speed of the drive of the line (16) of the bottom-half moulds (14).

5. Device according to one of claims 1 to 4,
**characterized therein that**
the cam mechanism (24) can be moved longitudinally in the feed direction (18) with respect to the line (16).

6. Device according to one of claims 1 to 5,
**characterized therein that**
a signal transmitter connected to the cam mechanism (24) is provided for which an impulse actuating the cutting tool yields, while the sliding carriage (22) moves at the same speed as the line (16).

7. Device according to one of claims 1 to 6,
**characterized therein that**
a second cutting tool provided for on the sliding carriage (22) which takes away a portion on the front side of a shaped part.

8. Device according to one of claims 1 to 7,
**characterized therein that**
a finishing tool (23) is arranged on the sliding carriage (22) which shapes the front side of the shaped part.

9. Device according to one of claims 1 to 8,
**characterized therein that**
in the area of the dead points shock absorbers and/or energy accumulators are provided for receiving or returning the kinetic energy of the stroke movement of the sliding carriage (22).

## Revendications

1. Dispositif (10) pour découper des tuiles sous forme de pièces moulées à partir d'une bande en béton frais acheminée en continu par une rangée (16) de demi-moules inférieurs (14) d'égale longueur, présentant un poste de coupe (20) avec au moins un outil de découpage sur un chariot (22) pouvant effectuer un mouvement réversible ou de navette et que l'on peut bouger au moins pendant une courte période à la vitesse de la rangée (16) parallèlement à la direction d'acheminement (18) de celle-ci,
**caratérisé en ce que**
une commande à came (24) est prévue pour actionner le chariot (22), laquelle meut le chariot (22) sur une distance déterminée à la vitesse de la rangée (16) parallèlement à la direction d'acheminement (18) de celle-ci, en ce que le chariot (22) est guidé de force directement par la commande à came (24), la commande à came (24) présentant un disque à came (28) essentiellement en forme de coeur avec des portions de la forme d'une spirale d'Archimède et des éléments de guidage (30, 32) attenants à la surface du disque à came (28) reliés au chariot (22).

2. Dispositif selon la revendication 1,
**caratérisé en ce que**
la course du chariot (22) pouvant effectuer le mouvement réversible est plus petite que la demi longueur des demi-moules inférieurs (14).

3. Dispositif selon la revendication 1 ou 2,
**caratérisé en ce que**
la commande à came (24) peut être accouplée à l'entraînement de la rangée (16).

4. Dispositif selon l'une des revendications 1 à 3,
**caratérisé en ce que**
la vitesse de rotation de la commande à came (24) est réglable par rapport à celle de l'entraînement de la rangée (16) des demi-moules inférieurs (14).

5. Dispositif selon l'une des revendications 1 à 4,
**caratérisé en ce que**
la commande à came (24) peut effectuer un mouvement longitudinal dans le sens de l'acheminement (18) par rapport à la rangée (16).

6. Dispositif selon l'une des revendications 1 à 5,
**caratérisé en ce que**
un poste transmetteur de signaux relié à la commande à came (24) est prévu qui émet une impulsion actionnant l'outil de découpage pendant que le chariot (22) fait un mouvement à la même vitesse que la rangée (16).

7. Dispositif selon l'une des revendications 1 à 6,
**caratérisé en ce que**
sur le chariot (22) un deuxième outil de découpage est prévu qui enlève une portion sur le côté frontal d'une pièce moulée.

8. Dispositif selon l'une des revendications 1 à 7,
**caratérisé en ce que**
un outil de finissage (23) est placé sur le chariot (22), donnant forme au côté frontal de la pièce moulée.

9. Dispositif selon l'une des revendications 1 à 8,
**caratérisé en ce que**
des amortisseurs et/ou des accumulateurs d'énergie sont prévus pour recevoir ou renvoyer l'énergie cinétique de la course du chariot (22) dans la zone des points morts.
